# EUROPÄISCHE PATENTSCHRIFT

(11) **EP 0 977 645 B1**
(45) Veröffentlichungstag und Bekanntmachung des Hinweises auf die Patenterteilung: **30.01.2002**
(21) Anmeldenummer: 98917034.5
(22) Anmeldetag: 20.03.1998
(51) Int. Cl.: B23B 31/107

(54) **SPANNFUTTER FÜR RUNDLAUFWERKZEUGE**
CLAMPING CHUCK FOR ROTATING TOOLS
MANDRIN DE SERRAGE POUR OUTILS ROTATIFS

(30) Priorität: 23.04.1997 DE 19717005
(43) Veröffentlichungstag der Anmeldung: 09.02.2000
(73) Patentinhaber: KENNAMETAL INC., Latrobe, PA 15650-0231 (US)
(72) Erfinder: MÜLLER, Gebhard, D-90766 Fürth (DE); SCHUFFENHAUER, Michael, D-90765 Fürth (DE); PREY, Martin, D-92536 Pfreimd (DE)
(74) Vertreter: Tergau & Pohl Patentanwälte
(86) Internationale Anmeldenummer: EP9801645
(87) Internationale Veröffentlichungsnummer: WO9847649

(56) Entgegenhaltungen:
- EP-A- 0 189 068
- DE-A- 3 728 727
- DE-U- 9 010 657
- GB-A- 191 329 908

## Beschreibung

Die Erfindung betrifft ein Spannfutter für Rundlaufwerkzeuge mit den gattungsbildenden Merkmalen des Oberbegriffs des Anspruches 1 und wie z.B. aus GB-A-29908 bekannt ist.

In der Metallbearbeitung werden Rundlaufwerkzeuge über ein Spannfutter in der Werkzeugmaschine gespannt. Bevorzugt werden Rundlaufwerkzeuge mit stan-dardisierten Werkzeugschäften eingesetzt. Konventionell weisen diese Werkzeugschäfte eine Abflachung zur Herstellung eines Formschlusses für die Drehmomentmitnahme auf. Speziell für den Einsatz in Bohrwerkzeugen indessen werden wegen ihrer günstigeren Herstellkosten Werkzeugschäfte ohne Abflachung in rundum zylindrischer Form eingesetzt (DIN 1835 A und 6535 A). Bei diesen erfolgt die Drehmomentmitnahme kraftschlüssig. Das erfindungsgemäße Spannfutter ist für solche Rundlaufwerkzeuge mit rundum zylindrischem Spannschaft bestimmt.

Bei vorbekannten Spannfuttern für mit vollzylindrischen Schäften ausgerüstete Rundlaufwerkzeuge erfolgt die Drehmomentübertragung durch Reibschluß, indem eine Spannschraube den Spannschaft direkt radial beaufschlagt. Solche Spannfutter eignen sich zur Übertragung von nur geringen und damit für die Bohrbearbeitung vielfach nicht ausreichenden Drehmomenten. Zur Erhöhung der zu übertragenden Drehmomente ist es bei Spannfuttern für Werkzeuge mit vollzylindrischen Spannschäften bekannt, den Spannschaft eingebettet in eine geschlitzte Hülse innerhalb des Grundkörpers des Spannfutters zu spannen, wobei die radial in den Grundkörper eingeschraubte Spannschraube die besagte Hülse von außen beaufschlagt, also indirekt auf den Spannschaft einwirkt. Diese Lösung setzt voraus, daß genügend Bauraum zur Montage der Hülse vorhanden ist. Außerdem bedeutet eine Hülse einen erhöhten baulichen Aufwand.

Zur Vermeidung einer solchen zwischen Spannschraube und Spannschaft befindlichen Hülse und trotzdem zur Gewährleistung einer guten Drehmomentübertragung ist es bei Spannfuttern der eingangs genannten Art weiter bekannt, zwischen der Spannschraube und dem Spannschaft ein Druckstück im radialen Durchgangsloch zu positionieren, welches nicht um die Lochachse drehbar, jedoch in Einschraubrichtung verschiebbar gelagert ist. Das Druckstück beaufschlagt den Spannschaft mit seiner Stirnseite und ist auf seiner Rückseite von der Spannschraube beaufschlagt (GB 29 908; 1913). Durch die axial verschiebbare, aber nicht drehbare Lagerung des Druckstückes im Durchgangsloch ist es möglich, die den Spannschaft beaufschlagende Stirnfläche des Druckstückes mit einer dem Spannschaft entsprechenden Oberflächenkontur zu versehen und dadurch eine flächenförmige Beaufschlagung des Spannschaftes zu erzielen.

Bei einem ähnlichen, ebenfalls vorbekannten Spannfutter mit ebenfalls zwischen der Spannschraube und dem Spannschaft des Werkzeuges eingefügtem Druckstück ist das Druckstück unverlierbar in einen Aufnahmeraum an der Stirnseite der Spannschraube derart eingebettet, daß es beim Lösen bzw. beim Herausschrauben der Spannschraube vom Spannschaft des Werkzeuges abgehoben und mitgenommen wird (US 4 611 960). Das erleichtert das Einsetzen und Herausnehmen des Spannschaftes am Spannfutter. Das unverlierbare Einbetten des Druckstückes an dem Stirnende der Befestigungsschraube erfordert jedoch eine Verformung der Druckschraube und damit ist ein beachtlicher Fertigungsaufwand verbunden. Außerdem dreht sich das Druckstück in der Regel mit der Drehung der Spannschraube mit, wenn kein Kontakt mit dem Spannschaft des Werkzeugs besteht. Dadurch wird die Drehstellung des Druckstückes in unerwünschter Weise verändert.

Der Erfindung liegt die Aufgabe zugrunde, bei einem Spannfutter der eingangs genannten Art in einfacher Weise zu gewährleisten, daß bei einer Lösung der Spannschraube ohne besonderen zusätzlichen Fertigungsaufwand das Druckstück vom Spannschaft abgehoben und damit ein klemmungsfreies Einsetzen und Lösen des Spannschaftes aus dem Spannfutter ermöglicht wird. Diese Aufgabe wird durch Anspruch 1 gelöst.

Diese Lösung erfordert keinen zusätzlichen radialen Bauraum, der zu einer Vergrößerung des Durchmessers des Grundkörpers des Spannfutters führen könnte. Außerdem gewährleistet diese Lösung, daß das Druckstück bei gelöster Spannschraube radial nach außen so weit verschoben wird, daß sein Kopfende aus dem Aufnahmeraum für den Spannschaft entfernt ist. Weiterhin gleicht diese Lösung in einfacher Weise Toleranzen des Spannschaftes aus. Schließlich begünstigt sie ein klemmungsfreies Entnehmen des Werkzeuges aus dem Grundkörper. Außerdem erleichtert diese Konstruktion eine geeignete Positionierung des Druckstückes, welches bei der Übertragung größerer Drehmomente regelmäßig in mehrfacher Anzahl vorhanden ist.

In besonders vorteilhafter Weise ist das Federelement nach Anspruch 5 und insbesondere nach Anspruch 6 als Ring aus gummielastischem Werkstoff, insbesondere als O-Ring ausgebildet. Hierdurch ist es - vorteilhafterweise in Ausgestaltung nach Anspruch 7 und 8 - weiter zur Sicherung der Drehstellung des Druckstücks innerhalb des Durchgangsloches geeignet. Die Ringform und der gummielastische Werkstoff sowie die gewählten Vorspannungsverhältnisse erzeugen nämlich einen Reibschluß, der bei geeigneter Bemessung die axial auf den Druckkörper einwirkende Rückstellung nicht behindert, jedoch eine ungewollte Drehung des Druckstücks innerhalb des Durchgangsloches verhindert. Diese Drehverhinderung ist von besonderem Vorteil im Hinblick auf die Ausmuldung des den Spannschaft beaufschlagenden Kopfendes des Druckstückes nach Anspruch 9. Die Ausmuldung erfordert eine Ausrichtung des Druckstückes zur Anpassung seiner Ausmuldung an den in den Aufnahmeraum einzusetzenden Spannschaft. Diese einmal getroffene Ausrichtung soll möglichst aufrechterhalten bleiben, um nicht bei jedem erneuten Spannvorgang zunächst das Druckstück hinsichtlich seiner Ausmuldung gegenüber dem Spannschaft ausrichten zu müssen. Außerdem wirkt die elastische Ringform des Federelements bei angezogener Spannschraube als Ringdichtung.

Die Dimensionierung der Ausmuldung des Fußendes des Druckstückes ist zweckmäßig nach Anspruch 10 getroffen. Sie ermöglicht auf der einen Seite die gemäß Anspruch 9 angestrebte partielle Umschlingung des Spannschaftes des Werkzeuges durch das Druckstück beim Spannen. Die Dimensionierung nach Anspruch 10 führt beim Spannen zu einer leichten, innerhalb des Elastizitätsbereiches des Druckstück-Werkstoffes liegenden Spreizung der Umschlingungsmulde und sichert damit eine Rückfederung des Druckstückes vom Spannschaft nach dem Lösen der Spannschraube. Damit löst sich das Druckstück nach dem Lösen der Spannschraube selbsttätig von seiner flächigen Auflage am Spannschaft und der vom Federelement durch seine Kompression aufgebrachte, auf das Druckstück in vom Werkzeugschaft weggewandeter Richtung einwirkende Rückstelldruck wird nur noch für die Verschiebebewegung des Druckstückes benötigt.

Die Ausgestaltung nach Anspruch 11 ermöglicht es, durch die Spannschraube hindurch die Drehstellung des Druckstückes gegenüber dem Spannschaft von außen z.B. durch einen Schraubendreher zu justieren.

Die Erfindung wird anhand der Figuren beispielsweise beschrieben. Es zeigen:
- Fig. 1: einen Längsschnitt durch das Spannfutter mit gespanntem Bohrer.
- Fig. 2: einen Querschnitt entsprechend der Linie II-II in Fig. 1 durch das Spannfutter in dessen Lösestellung bei entnommenen Bohrer.
- Fig. 3: in vergrößerter Seitenansicht das Druckstück.
- Fig. 4: einen Querschnitt durch das Spannfutter analog Fig. 2 mit auf der linken, mit a) gekennzeichneten Seite neben der Mittelachse des Durchgangsloches in Lösestellung und auf der rechten, mit b) gekennzeichneten Seite in Spannstellung befindlichem Druckstück bzw. Spannschraube.

Das Spannfutter 3 dient zur Spannung eines Bohrers 1, dessen Spannschaft 2 rundum zylindrisch nach DIN 1835 A und 6535 A ausgebildet ist. Das Spannfutter 3 umgibt den Spannschaft 2 mit dem Grundkörper 4 hülsenförmig. Der Grundkörper 4 nimmt den Spannschaft 2 mit seinem Aufnahmeraum 5 auf, der dementsprechend die Form eines Hohlzylinders aufweist. Die den Aufnahmeraum 5 umgebende Hüllwand 6 des Grundkörpers 4 ist von mehreren axial versetzt angeordneten Durchgangslöchern 7 durchsetzt. Die Lochachsen 8 der Durchgangslöcher 7 verlaufen radial. Ein jedes Durchgangsloch 7 dient an seinem dem Aufnahmeraum 5 zugewandten inneren Ende zur Aufnahme eines Druckstückes 9 und außen einer das Druckstück 9 radial einwärts beaufschlagenden Spannschraube 10. Das Druckstück 9 ist mit einem der zylindrischen Form des Spannschaftes 2 des Bohrers 1 angepaßten Fußende 11 ausgestattet.

Die Spannschraube 10 ist in Einschraubrichtung 12 von außen radial nach innen einschraubbar. Sie ist mit einem in Richtung der Lochachse 8 durchgehenden Innensechskant 13 zur Drehmomentaufnahme versehen. Durch das Hindurchreichen des Innensechskant 13 durch die Spannschraube 10 hindurch ist jederzeit das Kopfende 14 des Druckstückes 9 von der Außenseite 15 des Grundkörpers 4 her erreichbar.

Das Druckstück 9 ist mit einem Ringflansch 16 als Radialvorsprung versehen, der einen Axialanschlag gegenüber dem als Querschnittsverengung wirksamen ringförmigen Halskragen 17 am inneren Ende des Durchgangsloches 7 bildet. Zwischen Ringflansch 16 und Halskragen 17 ist ein ringförmiges Federelement 18 aus kompressiblem, gummielastischem Werkstoff angeordnet. Dieses Federelement 18 ist ein O-Ring, welcher aufgrund seiner elastischen Rückstellkraft in von der Spannschraube 10 unbelastetem Zustand das Druckstück 9 gegen die Einschraubrichtung 12 nach außen drängt. Es ist auch als Dichtung wirksam. Das Federelement 18 umgibt das im Querschnitt kreisförmige Mantelteil des Druckstückes 9 mit einer gewissen, radial nach innen gerichteten Vorspannung, die auch bei gelöster Spannschraube 10 einen Reibschluß erzeugt, der die einmal einjustierte Drehstellung des Druckstückes 9 innerhalb des Durchgangsloches 7 sichert. Das Federelement 18 sitzt ortsfest in einer in das Durchgangsloch 7 eingeformten Ringnut 19 ein. Die Ringnut 19 liegt zwischen dem Halskragen 17 am inneren Lochausgang und dem Innengewinde 20, welches von der Außenseite 15 des Durchgangsloches 7 her nach innen bis zur Ringnut 19 reicht und zur Schraubaufnahme der Innensechskantschraube 10 dient.

Das Druckstück 9 ist an seinem Fußende 11 zur Bildung einer der Oberflächenform des Spannschaftes 2 angepaßten Druckfläche 21 ausgemuldet. Die Ausmuldung 22 weist die Form eines Hohlzylindersegmentes auf, dessen Krümmungsdurchmesser 23 geringfügig kleiner ist als der Nenndurchmesser 24 des Spannschaftes 2.

Das Kopfende 14 des Druckstückes 9 ist mit einer Schlitzung 25 für einen durch die Spannschraube 10 hindurchgreifenden Drehmomentangriff z.B. einer Schraubendreherklinge versehen. Damit ist die Drehstellung des Druckstückes 9 gegenüber dem Spannschaft 2 im Hinblick auf die Ausrichtung von dessen Ausmuldung 22 einstellbar ist.

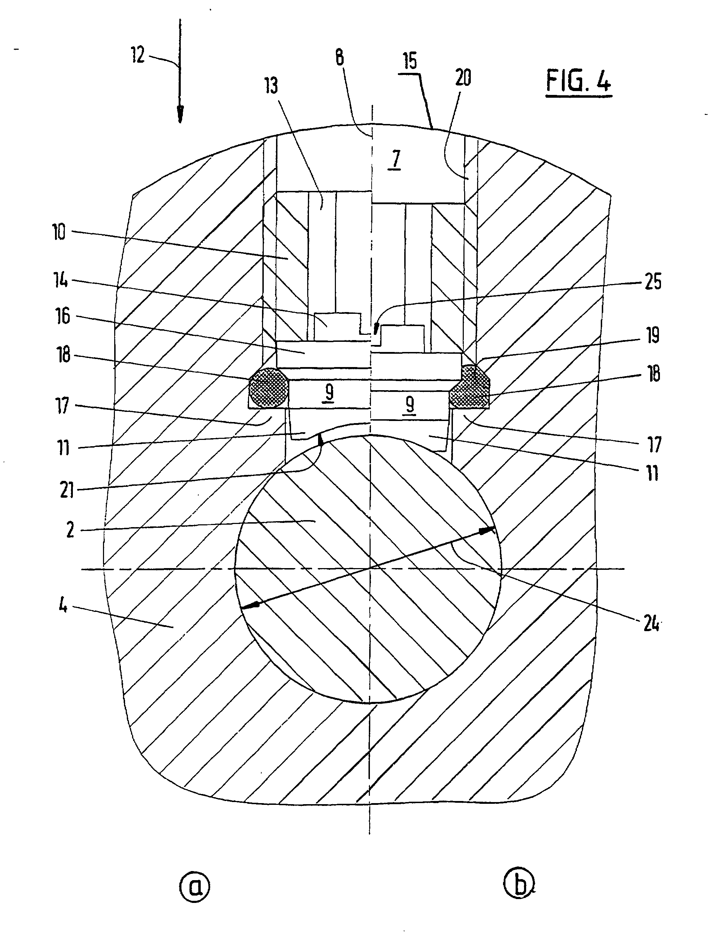

In Spannausgangsstellung befindet sich das Fußende 11 des Druckstückes 9 in von dem Spannschaft 2 abgehobener und in das Durchgangsloch 7 zurückgezogener Position (Fig. 4 a) - linke Seite). In dieser zurückgezogenen, in das Durchgangsloch 7 weggetauchten Ausgangsposition läßt sich der Bohrer 1 ungehindert mit seinem Spannschaft 2 in den Aufnahmeraum 5 des Grundkörpers 4 einführen. Um die Ausmuldung 22 der Druckfläche 21 des Fußendes 11 gegenüber dem Spannschaft 2 so auszurichten, daß das Fußende 11 nicht gegenüber dem Spannschaft 2 verkantet ist, kann das Druckstück 9 über einen in die Schlitzung 25 an dessen Kopfende 14 eingreifenden, von der Außenseite 15 her betätigten Schraubendreher in die richtige Drehposition gebracht werden. In dieser Drehposition wird das Druckstück 9 durch Reibschluß des ortsfest in der Ringnut 19 einsitzenden Federelements 18, nämlich eines O-Ringes gehalten. Sodann wird die Spannschraube 11 durch an ihrem Innensechskant 13 angreifendes Drehmoment eingeschraubt. Dadurch wird das Druckstück 9 in seine aus Fig. 4 b) -rechte Seite - ersichtliche Spannposition überführt, in welcher das Federelement 18 komprimiert ist. Bei der Spannung wird die Ausmuldung 22 am Fußende 11 des Druckstückes 9 leicht im elastischen Werkstoffbereich aufgespreizt mit der Folge, daß die Ausmuldung 22 einen geringfügig vergrößerten Krümmungsdurchmesser 23 aufweist.

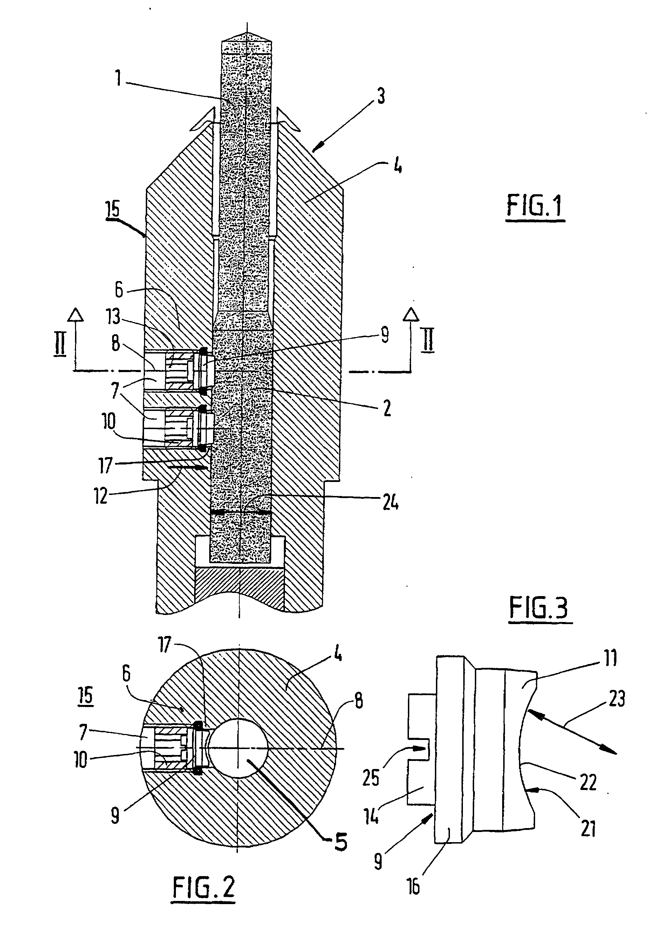

Zum Lösen der Spannung wird die Spannschraube 10 entgegen der Einschraub-richtung 12 zurückbewegt. Dabei federt die Spreizung der Ausmuldung 22 des Kopfendes 11 des Druckstückes 9 elastisch derart zurück, daß sich die Ausmuldung 22 aus ihrem Flächenkontakt am Umfang des Spannschaftes 2 löst. Desweiteren expandiert das Federelement 18 aus seiner komprimierten Spannstellung in seine entspannte Ausgangsstellung (Fig. 4 a) - linke Seite). Dadurch wird das Druckstück 9 in das Durchgangsloch 7 hineingedrückt. Sein Kopfende 11 verliert jeglichen Kontakt mit dem Spannschaft 2. Es wird von dem Spannschaft 2 abgehoben und aus dem Bereich des Aufnahmeraumes 5 zurückgedrängt, so daß es auch das Einsetzen eines neuen Bohrers 1 nicht behindert (Fig. 2).

## Patentansprüche

1. Spannfutter für Rundlaufwerkzeuge
- mit einem deren zylindrischen Spannschaft (2) hülsenförmig umgebenden Grundkörper (4),
-- dessen den Aufnahmeraum (5) für den Spannschaft (2) des Werkzeuges umgebende Hüllwand (6) von einem im wesentlichen radialen Durchgangsloch (7) durchsetzt ist
- mit einer in das Durchgangsloch (7) einschraubbaren Spannschraube (10),
-- die einen im Aufnahmeraum (5) einliegenden Spannschaft (2) in Einschraubrichtung beaufschlagt und
- mit einem im Durchgangsloch zwischen Spannschraube (10) und Aufnahmeraum (5) verschiebbar einliegenden Druckstück (9),
-- dessen dem Aufnahmeraum (5) zugewandtes Fußende (11) der Oberfläche des Spannschaftes (2) angepaßt ist,
**dadurch gekennzeichnet**,
- daß das Druckstück (9) mit einem Radialvorsprung (16) versehen ist,
-- der einen Axialanschlag gegenüber einer als Verliersicherung wirksamen Querschnittsverengung (17) am inneren Ende des Durchgangsloches (7) bildet und
- daß zwischen dem Radialvorsprung (16) des Druckstückes (9) und Querschnittsverengung (17) des Durchgangsloches ein elastisch kompressibles Federelement (18) angeordnet ist,
-- welches aufgrund seiner Rückstellkraft in von der Spannschraube (10) unbelastetem Zustand das Druckstück (9) gegen die Einschraub-richtung (12) nach außen drängt.

2. Spannfuttter nach Anspruch 1,
**dadurch gekennzeichnet,**
**daß** der Radialvorsprung des Druckstückes (9) durch einen Ringflansch (16) gebildet ist.

3. Spannfutter nach Anspruch 1,
**dadurch gekennzeichnet,**
**daß** die Querschnittsverengung ein den Lochausgangs zum Aufnahmeraum (5) hin enthaltender ringförmiger Halskragen (17) ist.

4. Spannfutter nach Anspruch 3,
**dadurch gekennzeichnet,**
**daß** der Halskragen (17) konzentrisch zur Lochachse (8) des Durchgangsloches (7) ist.

5. Spannfutter nach Anspruch 1,
**dadurch gekennzeichnet,**
**daß** das Federelement (18) ein am Ringflansch (16) des Druckstückes (9) anliegender Ring aus gummielastischem Werkstoff ist.

6. Spannfutter nach Anspruch 5,
**dadurch gekennzeichnet,**
**daß** das Federelement (18) ein einen im Querschnitt kreisförmigen Mantelteil des Druckstückes (9) umgebender O-Ring ist.

7. Spannfutter nach Anspruch 1,
**dadurch gekennzeichnet,**
**daß** das Federelement (18) ortsfest in einer in das Durchgangsloch (7) eingeformten Ringnut (19) einsitzt.

8. Spannfutter nach Anspruch 6 oder 7,
**dadurch gekennzeichnet,**
**daß** das Federelement (18) das Druckstück (9) mit einer Vorspannung radial nach innen beaufschlagt.

9. Spannfutter nach Anspruch 1,
**dadurch gekennzeichnet,**
**daß** das den Spannschaft (2) beaufschlagende Fußende (11) des Druckstückes (9) zur Bildung einer der Oberflächenform des Spannschaftes (2) angepaßten Druckfläche (21) ausgemuldet ist.

10. Spannfutter nach Anspruch 9,
**gekennzeichnet durch**
die Form eines Hohlzylindersegmentes als Druckfläche (21), dessen Krümmungsdurchmesser (23) geringfügig kleiner ist als der Nenndurchmesser (24) des zuzuordnenden Spannschaftes (2).

11. Spannfutter nach Anspruch 1,
**dadurch gekennzeichnet,**
- **daß** die Spannschraube (10) in Axialrichtung von einer Drehmomentaufnahmeöffnung, insbesondere von einem innensechskant (13) durchsetzt ist und
- **daß** das Kopfende (14) des Druckstückes (9) mit einer Öffnung, insbesondere einer Schlitzung (25) für einen durch die Spannschraube (10) hindurchgreifenden Drehmomentangriff versehen ist.

## Claims

1. Chuck for concentric tools
- having a basic body (4) which surrounds the cylindrical chucking shank (2) in a sleeve shape,
-- an essentially radial through-hole (7) passing through the encasing wall (6) of this basic body (4), which encasing wall (6) surrounds the locating space (5) for the chucking shank (2) of the tool,
- having a chucking screw (10) which can be screwed into the through-hole (7),
-- this chucking screw (10) acting in the screw-in direction on a chucking shank (2) lying in the locating space (5), and
- having a pressure piece (9) lying in a displaceable manner in the through-hole between chucking screw (10) and locating space (5),
-- the base end (11), facing the locating space (5), of this pressure piece (9) being adapted to the surface of the chucking shank (2),
**characterized in that**
- the pressure piece (9) is provided with a radial projection (16),
-- which forms an axial stop relative to a cross-sectional reduction (17), effective as a captive locking means, at the inner end of the through-hole (7), and
- an elastically compressible spring element (18) is arranged between the radial projection (16) of the pressure piece (9) and the cross-sectional reduction (17) of the through-hole,
-- this spring element (18), on account of its restoring force, in the state in which it is not loaded by the clamping screw (10), displacing the pressure piece (9) outwards against the screw-in direction (12).

2. Chuck according to Claim 1, **characterized in that** the radial projection of the pressure piece (9) is formed by an annular flange (16).

3. Chuck according to Claim 1, **characterized in that** the cross-sectional reduction is an annular neck collar (17) containing the hole outlet towards the locating space (5).

4. Chuck according to Claim 3, **characterized in that** the neck collar (17) is concentric to the hole axis (8) of the through-hole (7).

5. Chuck according to Claim 1, **characterized in that** the spring element (18) is a ring which bears against the annular flange (16) of the pressure piece (9) and is made of elastomeric material.

6. Chuck according to Claim 5, **characterized in that** the spring element (18) is an O-ring surrounding a lateral surface part, circular in cross section, of the pressure piece (9).

7. Chuck according to Claim 1, **characterized in that** the spring element (18) sits in a fixed position in an annular groove (19) integrally formed in the through-hole (7).

8. Chuck according to Claim 6 or 7, **characterized in that** the spring element (18) acts radially inwards with a prestress on the pressure piece (9).

9. Chuck according to Claim 1, **characterized in that** the base end (11), acting on the chucking shank (2), of the pressure piece (9) is concavely arched for forming a pressure surface (21) adapted to the surface shape of the chucking shank (2).

10. Chuck according to Claim 9, **characterized by** the shape of a hollow-cylinder segment as pressure surface (21), the diameter (23) of curvature of which is slightly smaller than the nominal diameter (24) of the associated chucking shank (2).

11. Chuck according to Claim 1, **characterized in that** a torque-absorbing opening, in particular a hexagon socket (13), passes through the chucking screw (10) in the axial direction, and **in that** the head end (14) of the pressure piece (9) is provided with an opening, in particular a slot (25), for application of torque passing through the chucking screw (10).

## Revendications

1. Mandrin de serrage pour outils rotatifs,
- comportant un corps de base (4) entourant à la manière d'une douille leur tige de serrage cylindrique (2),
-- dont la paroi enveloppe (6) entourant la chambre de réception (5) pour la tige de serrage (2) de l'outil est traversée par un trou de passage sensiblement radial (7),
- comportant une vis de serrage (10) susceptible d'être vissée dans le trou de passage (7),
-- laquelle sollicite en direction de vissage une tige de serrage (2) posée dans la chambre de réception (5), et
- comportant un élément de pression (9) posé avec faculté de translation entre la vis de serrage (10) et la chambre de réception (5) dans le trou de passage,
-- élément dont l'extrémité pied (11) orientée vers la chambre de réception (5) est adaptée à la surface de la tige de serrage (2),
**caractérisé en ce que**
- l'élément de pression (9) est pourvu d'une saillie radiale (16),
-- laquelle forme une butée axiale par rapport à un rétrécissement de section (17) faisant office de moyen anti-perte à l'extrémité intérieure du trou de passage (7), et
- **en ce qu'**un élément élastique compressible (18) est agencé entre la saillie radiale (16) de l'élément de pression (9) et le rétrécissement de section (17) du trou de passage,
-- élément élastique qui, en raison de son effort de rappel, force l'élément de pression (9) vers l'extérieur à l'opposé de la direction de vissage (12) dans l'état non chargé de la vis de serrage (10).

2. Mandrin de serrage selon la revendication 1, **caractérisé en ce que** la saillie radiale de l'élément de pression (9) est formée par une bride annulaire (16).

3. Mandrin de serrage selon la revendication 1, **caractérisé en ce que** le rétrécissement de section est un collet annulaire (17) comprenant la sortie du trou vers la chambre de réception (5).

4. Mandrin de serrage selon la revendication 3, **caractérisé en ce que** le collet (17) est concentrique à l'axe (8) du trou de passage (7).

5. Mandrin de serrage selon la revendication 1, **caractérisé en ce que** l'élément élastique (18) est un anneau en matériau présentant l'élasticité du caoutchouc qui prend appui contre la bride annulaire (16) de l'élément de pression (9).

6. Mandrin de serrage selon la revendication 5, **caractérisé en ce que** l'élément élastique (18) est un joint torique entourant une partie enveloppe de section circulaire de l'élément de pression (9).

7. Mandrin de serrage selon la revendication 1, **caractérisé en ce que** l'élément élastique (18) est logé de façon stationnaire dans une gorge annulaire (19) ménagée dans le trou de passage (7).

8. Mandrin de serrage selon l'une ou l'autre des revendications 6 et 7, **caractérisé en ce que** l'élément élastique (18) sollicite l'élément de pression (9) avec une précontrainte radialement vers l'intérieur.

9. Mandrin de serrage selon la revendication 1, **caractérisé en ce que** l'extrémité pied (11), sollicitant la tige de serrage (2), de l'élément de pression (9) est creusée pour former une surface de pression (21) adaptée à la forme superficielle de la tige de serrage (2).

10. Mandrin de serrage selon la revendication 9, **caractérisé par** la forme d'un segment cylindrique creux à titre de surface de pression (21) dont le diamètre de courbure (23) est légèrement inférieur au diamètre nominal (24) de la tige de serrage à associer (2).

11. Mandrin de serrage selon la revendication 1, **caractérisé en ce que**
- la vis de serrage (10) est traversée en direction axiale par une ouverture permettant l'application d'un couple de rotation, et particulier par un six pans creux, et **en ce que**
- l'extrémité tête (14) de l'élément de pression (9) est pourvue d'une ouverture, en particulier d'une fente (25) pour une application de couple de rotation traversant la vis de serrage (10).
